(19) Europäisches Patentamt
European Patent Office
Office européen des brevets

(11) Veröffentlichungsnummer: **0 027 294**
**B1**

(12) **EUROPÄISCHE PATENTSCHRIFT**

(45) Veröffentlichungstag der Patentschrift:
02.01.85

(51) Int. Cl.³: **B 62 D 1/04**

(21) Anmeldenummer: **80200954.8**

(22) Anmeldetag: **10.10.80**

(54) Lenkrad.

(30) Priorität: **16.10.79 DE 2941811**

(43) Veröffentlichungstag der Anmeldung:
**22.04.81 Patentblatt 81/16**

(45) Bekanntmachung des Hinweises auf die Patenterteilung:
**02.01.85 Patentblatt 85/1**

(84) Benannte Vertragsstaaten:
**DE FR GB IT**

(56) Entgegenhaltungen:
**DE - B - 2 109 463**
**FR - A - 1 211 113**

**Busslen; "Automobiltechnisches Handbuch"**
**Technischer Verlag Herbert Cram, Berlin 1965, S. 506**

(73) Patentinhaber: **KOLBENSCHMIDT Aktiengesellschaft, Christian-Schmidt-Strasse 8/12 Postfach 1351, D-7107 Neckarsulm (DE)**

(72) Erfinder: **Bauer, Wolfgang, Ing. grad., Welzheimer Strasse 5, D-8757 Karlstein 1 (DE)**
Erfinder: **Grosser, Werner, Hauptstrasse 26, D-8751 Sulzbach (DE)**
Erfinder: **Grothe, Klaus, Ing. grad, Karlstrasse 13, D-8570 Aschaffenburg (DE)**

(74) Vertreter: **Fischer, Ernst, Dr., Reuterweg 14, D-6000 Frankfurt am Main 1 (DE)**

## Beschreibung

Die Erfindung betrifft ein Lenkrad, bestehend aus einer gegossenen Nabe, darin eingegossenen Speichen und einem Kranz.

Ein solches Lenkrad ist im allgemeinen über die mit einer entsprechenden Bohrung versehene Nabe auf das kegelförmige, mit einem Gewinde versehene Ende der Lenksäule unter Verwendung einer Kerbe oder aber auch einer Vielkerbverzahnung aufgesetzt und mit einer Mutter fest mit der Lenksäule verspannt (Bussien: Automobiltechnisches Handbuch, Technischer Verlag Herbert Cram, Berlin 1965, S. 506).

Das Anbringen des Lenkrades auf der Lenksäule ist jedoch mit einem vergleichsweise hohen Aufwand verbunden, wobei es zusätzlich zu Beschädigungen der Kerbe bzw. der Kerbverzahnung kommen kann.

Es ist daher die Aufgabe der vorliegenden Erfindung, eine Lenkrad/Lenksäulen-Verbindung zu schaffen, die in einfacher Weise herstellbar und zugleich sicher ist, ohne die ästhetische Wirkung des gut gestalteten Lenkrades zu beeinträchtigen.

Die Lösung dieser Aufgabe besteht darin, daß die Lenkradnabe auf das zusammengequetschte Ende der Lenksäule gegossen ist, d. h. Lenkrad und Lenksäule sind einteilig miteinander verbunden.

Lenkradkranz und Lenkradspeichen bestehen vorzugsweise aus Stahldraht oder Stahlrohr. Gegebenenfalls kann der Lenkradkranz auch aus Aluminiumrohr gefertigt sein.

Die mit der Erfindung erzielten Vorteile bestehen darin, daß die relativ aufwendig herzustellende Kerbzahnung in der Lenkradnabe und die Montage des Lenkrades sowie die Befestigungsmutter entfallen. Bei einem solchen Lenkrad wird dadurch erheblich an Raum, insbesondere an Verformungshöhe für innerhalb des Lenkradkranzes angebrachte passive Sicherheitssysteme, z. B. für Polyurethanhartschaum-Deformationselemente, gewonnen. Insgesamt wird eine einfachere und vom Gewicht her leichtere Lenkrad-Lenksäulen-Verbindung erreicht, was dem Streben nach Leichtbauweise im Kraftfahrzeugbau entgegen kommt. Die mechanisch-technologischen Eigenschaften der erfindungsgemäß gestalteten Lenkrad/Lenksäulen-Verbindung entsprechen voll und ganz den von den Kraftfahrzeugherstellern gestellten Forderungen.

Die erfindungsgemäße Lenkrad/Lenksäulen-Verbindung läßt sich sowohl bei Lenkrädern ausführen, bei denen Nabe, Speichen und Kranz in einer Ebene liegen als auch für schüsselförmige Lenkräder, bei denen die Nabe gegenüber dem Lenkradkranz versenkt angeordnet ist. Ferner ist die Ausführungsform des Lenkrades insbesondere auch für die Anordnung eines als Aufprallschutz dienenden aufblasbaren Luftkissens innerhalb des Lenkradkranzes geeignet.

Die erfindungsgemäße Konstruktion ist in der nachstehend erläuterten, einen Querschnitt durch ein Lenkrad zeigenden Zeichnung beispielhaft dargestellt:

Die aus einem Stahlrohr bestehende Lenksäule 1 ist zusammen mit zwei Lenkradspeichen 2 in die im Druckgußverfahren hergestellte, gegenüber dem Lenkradkranz 3 versenkt angebrachte Lenkradnabe 4 eingegossen. Lenkradkranz 3, Lenkradspeichen 2 und Lenkradnabe 4 sind mit PU-Schaum 5 ummantelt. Die in die Lenkradnabe 4 eingegossene Lenksäule 1 ist an ihrem oberen Ende zusammengedrückt.

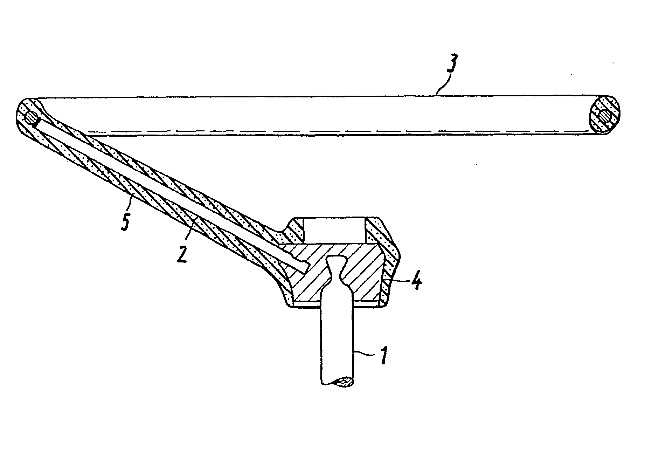

## Patentanspruch

Lenkrad, bestehend aus einer gegossenen Nabe (4), darin mit ihren inneren Enden eingegossenen Speichen (2) und einem Kranz (3), dadurch gekennzeichnet, daß die Nabe (4) auf das zusammengequetschte Ende der Lenksäule (1) gegossen ist.

## Claim

A steering wheel consisting of a cast hub (4), in which the inner ends of spokes (2) are cast integral and a rim (3) characterized in that the hub (4) is cast on the squeezed end of the steering wheel column (1).

## Revendication

Volant de direction constitué par un moyeu moulé (4) dans lequel sont emprisonnées par moulage les extrémités intérieures de rayons (2) et par une couronne (3), caractérisé par le fait que le moyeu (4) est moulé sur l'extrémité écrasée de la colonne de direction (1).